# EUROPÄISCHE PATENTSCHRIFT

(11) **EP 1 308 652 B1**
(45) Veröffentlichungstag und Bekanntmachung des Hinweises auf die Patenterteilung: **21.04.2004**
(21) Anmeldenummer: 02022317.8
(22) Anmeldetag: 08.10.2002
(51) Int. Cl.: F16H 63/32, F16H 63/30

(54) **Getriebeschalteinrichtung**
Gear shifting device
Dispositif de changement de vitesses pour transmission

(30) Priorität: 02.11.2001 DE 10154089
(43) Veröffentlichungstag der Anmeldung: 07.05.2003
(73) Patentinhaber: Bayerische Motoren Werke Aktiengesellschaft, 80809 München (DE)
(72) Erfinder: Körber, Martin, 85375 Neufahrn (DE); Bassner, Heinz, 85757 Karlsfeld (DE); Wagner, Norbert, 81549 München (DE)

(56) Entgegenhaltungen:
- DE-A- 19 919 271
- DE-C- 855 365
- US-A- 2 003 794

## Beschreibung

Die vorliegende Erfindung betrifft eine Getriebeschalteinrichtung gemäß dem Oberbegriff des Patentanspruches 1.

In Wechselgetrieben ohne Planetenradsätzen, werden, wie es beispielsweise in der DE 39 39 274 C1 erläutert ist, ein Gang geschaltet, indem eine Schiebemuffe axial verschoben wird. Die Schiebemuffe stellt zwischen einem drehbar auf einer Welle gelagerten Zahnrad und einer Festmuffe eine in Drehrichtung formschlüssige Verbindung her. Zur Verschiebung der Schiebemuffe ist üblicherweise entweder eine "Schaltgabel" oder eine "Schaltschwinge" vorgesehen.

Eine Schaltgabel sitzt formschlüssig auf einer zu Ihrer Lagerung und Führung dienenden Schaltstange und greift in eine am Außendurchmesser der Schiebemuffe umlaufende Ringnut ein. Bei einer axialen Verschiebung der Schaltgabel wird die Schiebemuffe mitgeführt. Bei einer Schaltgabel ist es ohne eine zusätzliche mechanische Übersetzung nicht möglich, an der Schiebemuffe einen anderen Schaltweg zu realisieren als an der Schaltstange bzw. der Schaltgabel.

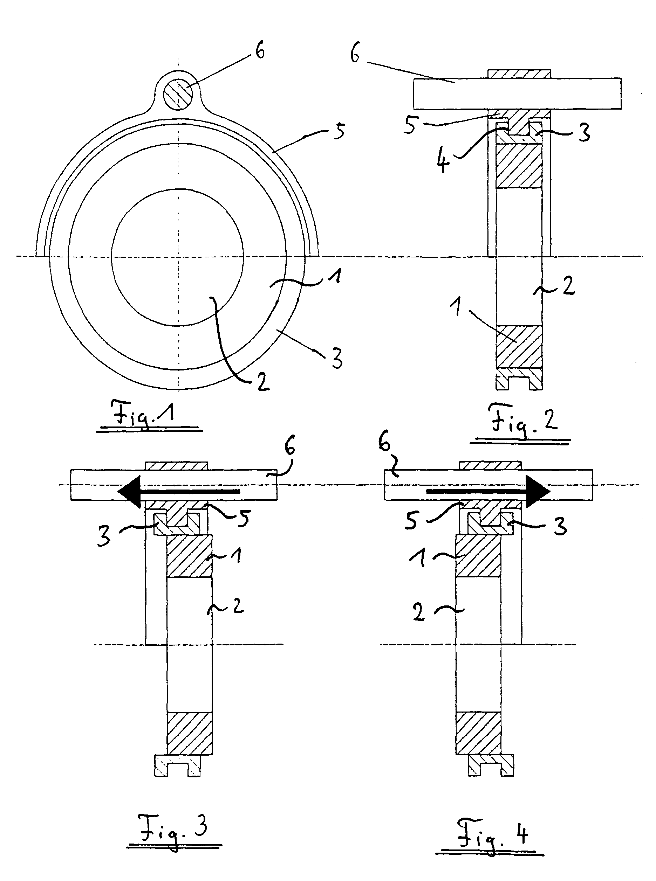

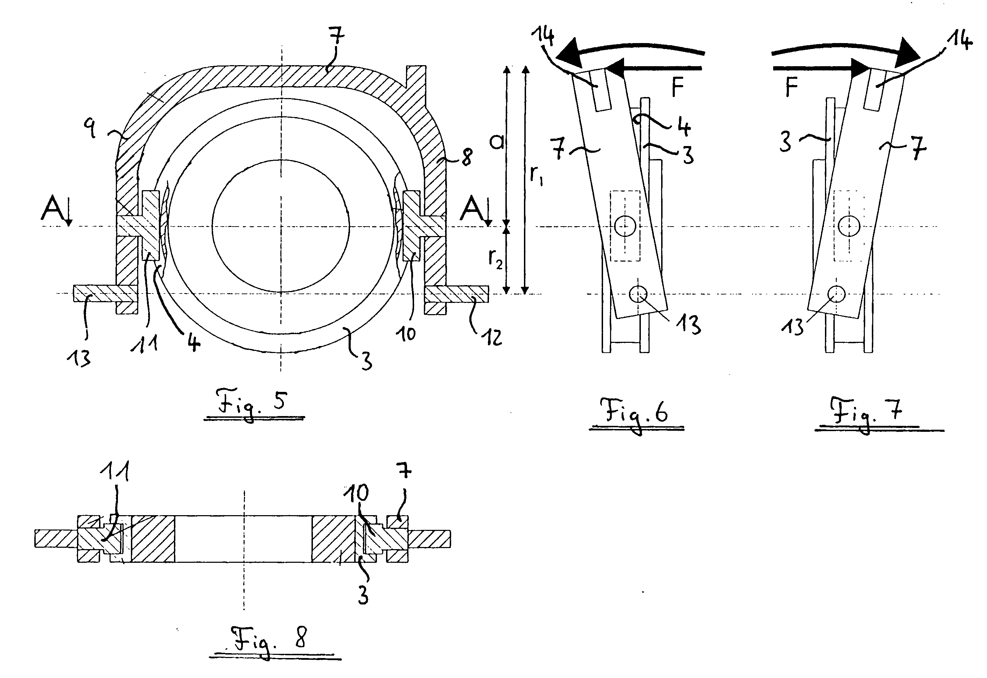

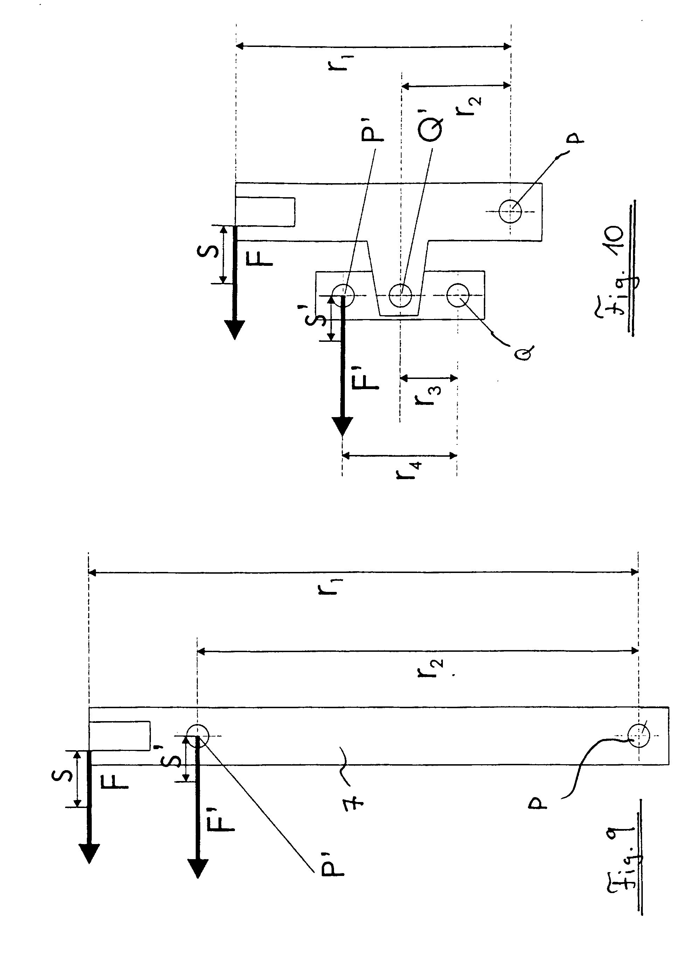

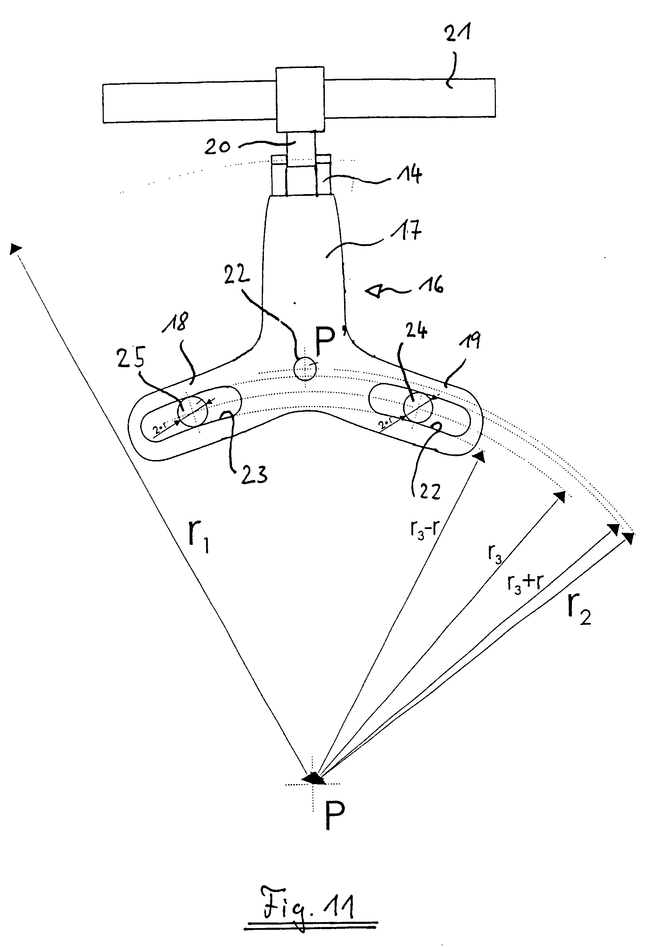

Ein derartige herkömmliche Getriebeschalteinrichtung ist in den Figuren 1 - 4 gezeigt. Dort ist eine Festmuffe 1 drehfest mit einer Welle 2 verbunden. Drehfest auf der Festmuffe 1 ist eine axial verschiebliche Schiebemuffe 3 angeordnet. Die Schiebemuffe 3 weist an ihrem Außenumfang eine umlaufende Nut 4 auf, in die eine Schaltgabel 5 eingreift, die mit einer Schaltstange 6 verbunden ist. Durch Betätigung der Schaltstange 6 kann die Schiebemuffe 3 axial verschoben und ein Gang geschaltet werden.

Eine Schaltschwinge hingegen, wie sie beispielsweise aus der DE 199 19 271 A1 bekannt ist, ist U-förmig gestaltet und weist an ihren beiden gegenüberliegenden Schenkeln Schwenklager auf, in die getriebefeste Lagerzapfen eingreifen.

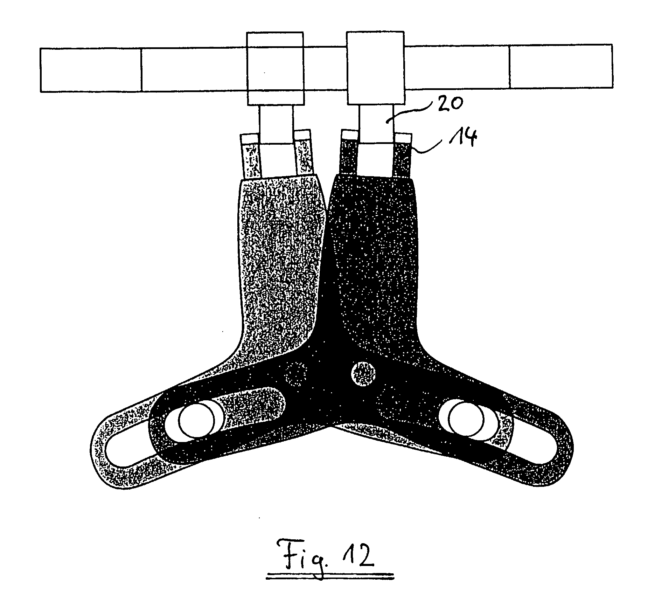

Eine ähnliche Schaltschwinge 7 nach dem Stand der Technik ist in den Figuren 5 - 8 dargestellt. In gegenüberliegenden Schenkeln 8, 9 der Schaltschwinge 7 sind beweglich Gleitsteine 10, 11 gelagert, die in die umlaufende Nut 4 der Schiebemuffe 3 eingreifen. Die Schaltschwinge 7 ist um eine durch Lagerzapfen 12, 13 gebildete Schwenkachse nach links bzw. rechts schwenkbar, was in den Figuren 6, 7 dargestellt ist. Durch Verschwenken der Schaltschwinge 7 wird die Schiebemuffe 3 axial nach links bzw. rechts verschoben. Für die Schwenkbetätigung der Schaltschwinge 7 ist ein Mitnehmer 14 vorgesehen, der mit einer hier nicht dargestellten Schaltwelle verbunden ist. Eine am Mitnehmer 14 von der Schaltwelle eingeleitete Schaltkraft wird an der Stelle ihrer Weiterleitung zur Schiebemuffe 3, das heißt "in Höhe" der Linie A-A im Verhältnis r₁/r₂, erhöht. Dementsprechend wird ein am Mitnehmer 14 von der Schaltwelle "eingesteuerter" Schaltweg s an der Weiterleitungsstelle zur Schiebemuffe 3, das heißt in Höhe der Linie A-A annähernd im Verhältnis r₂/r₁ verringert.

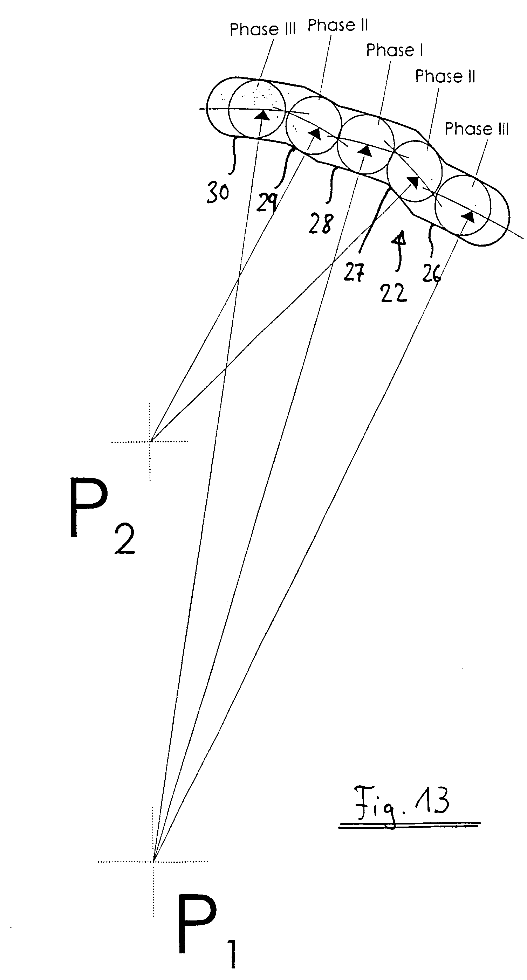

In Abhängigkeit von den kinematischen Verhältnissen innerhalb eines Getriebes kann der Fall auftreten, dass eine Schaltschwinge erforderlich ist, deren Schwenkachse aus Bauraumgründen nicht zu realisieren ist, da sie außerhalb des Getriebegehäuses liegen müsste, was in Figur 9 schematisch angedeutet ist. Ein Schaltweg s an der "Einleitungsstelle" der Schaltschwinge 7 muss zur Weiterleitung an die Schaltmuffe am Punkt P' in einen Schaltweg s' übersetzt werden. Die Schaltkraft wird dabei annähernd im Verhältnis r₁/r₂ erhöht. Das hierfür erforderliche Radienverhältnis r₂/r₁ würde dazu führen, dass der Schwenkpunkt P bzw. die Schwenkachse der Schaltschwinge 7 weit unterhalb des zu schaltenden Radsatzes und somit außerhalb des Getriebegehäuses liegen würde.

Für derartige Fälle wird bei herkömmlichen Getrieben ein zusätzlicher Übersetzungshebel verwendet, was in Figur 10 dargestellt ist. Der Übersetzungshebel ist schwenkbar um eine Achse P gelagert. Im Punkt Q' wird die annähernd im Verhältnis r₁/r₂ erhöhte Schaltkraft F in die Schaltschwinge 15 eingeleitet. An die hier nicht dargestellte Schiebemuffe wird eine Kraft F' weitergegeben, welche annähernd im Verhältnis (r₁/r₂) x (r₃/r₄) erhöht wurde. Der Schaltweg s wird dabei annähernd im Verhältnis (r₂/r₁) x (r₄/r₃) verringert. Ein Vorteil einer derartigen Konstruktion ist der geringere Abstand r₁ zwischen der Einleitungsstelle der Schaltkraft und der Schwenkachse P des Übersetzungshebels. Der Schwenkpunkt bzw. die Schwenkachse Q der Schaltschwinge kann somit innerhalb des Getriebegehäuses realisiert werden. Ein Nachteil eines zusätzlichen Übersetzungshebels ist aber das dadurch entstehende zusätzliche Spiel im Übertragungspfad der Schaltkraft sowie eine geringere Gesamtsteifigkeit. Dies kann zu Funktionsstörungen während des Schaltvorganges bzw. zu Beeinträchtigungen des Schaltkomforts führen.

Aufgabe der Erfindung ist es, eine hinsichtlich der o.g. Probleme verbesserte Schaltvorrichtung zu schaffen.

Diese Aufgabe wird durch die Merkmale des Patenanspruches 1 gelöst. Vorteilhafte Ausgestaltungen und Weiterbildungen der Erfindung sind den Unteransprüchen zu entnehmen.

Das Grundprinzip der Erfindung besteht in einer Getriebeschalteinrichtung mit einer Schaltmuffe, die durch ein um einen virtuellen Schwenkpol schwenkbares Betätigungselement verschiebbar ist. Das Betätigungselement ist in einer Schiebelagereinrichtung gelagert. Die "Schiebelagereinrichtung" kann beispielsweise durch Gleitlager gebildet sein. Alternativ dazu sind aber auch andere Lager geeignet, wie z.B. Wälzlager, insbesondere Nadellager. Das Verschieben des Betätigungselements entspricht kinematisch einer Schwenkbewegung um einen nur "virtuell" vorhandenen Schwenkpol, der außerhalb des Betätigungselements liegen kann.

Der Begriff "virtueller Schwenkpol" bedeutet in diesem Zusammenhang, dass das Betätigungselement im Unterschied zu einer herkömmlichen Schaltschwinge nicht im Schwenkpol gelagert ist. Der Schwenkpol ist also nicht getriebegehäusebezogen. Er kann sogar außerhalb des Getriebegehäuses liegen. Mit einer derartigen Anordnung können beliebige "innere" Übersetzungen zwischen der Krafteinleitungsstelle in das Betätigungselement bzw. die Schaltschwinge und der "Kraftausleitungsstelle" an der Schiebemuffe realisiert werden.

Ein Betätigungselement gemäß der Erfindung weist mindestens zwei getriebegehäusefeste "Lagerpunkte" auf. Im Unterschied zu einer herkömmlichen Schaltschwinge sind die Lagerpunkte jeweils durch ein "Paar" relativ zueinander verschieblicher "Lagerelemente" gebildet. Bei den beiden Paaren von Lagerelementen handelt es sich jeweils um einen Lagerzapfen, der in einer Führungsbahn verschieblich ist. Die Lagerzapfen können entweder gleitend in der zugeordneten Führungsbahn verschieblich sein oder über Wälzlager auf der Führungsbahn abrollen.

Wenn das Betätigungselement die Form einer "Klammer" bzw. eines "U" hat, sind vorzugsweise in jedem der beiden Schenkel zwei Lagerelemente vorgesehen. Einander zugeordnete Lagerelemente des einen und des anderen Schenkels brauchen dabei nicht unbedingt in einer Flucht liegen.

Nach einer Weiterbildung der Erfindung liegen die beiden "Lagerpunkte" in einer gemeinsamen Ebene. Vorzugsweise sind die Lagerpunkte jeweils durch einen Lagerzapfen gebildet, der in einer zugeordneten geschlossenen Kulissenführung verschieblich ist.

Die Führungsbahnen bzw. Kulissenführungen können durch Ausnehmungen gebildet sein, die im Betätigungselement vorgesehen sind. In diesem Fall sind die Lagerzapfen getriebefest. Alternativ dazu können die Führungsbahnen getriebefest und die Lagerzapfen am Betätigungselement angeordnet, d.h. zusammen mit dem Betätigungselement verschieblich sein.

Vorzugsweise sind zwei separate geschlossene Kulissenführungen vorgesehen. Die Führungsbahnen der Kulissenführungen können glatte gekrümmte Kurven sein. Es müssen aber nicht unbedingt separate Führungsbahnen vorgesehen sein. Sie müssen auch nicht unbedingt geschlossen sein.

Bei einer Variante der Erfindung sind die Führungsbahnen exakt kreisförmig gekrümmt und weisen einen gemeinsamen Krümmungsmittelpunkt auf. In diesem Fall weist das Betätigungselement einen "ortsfesten" Schwenkpol auf.

Alternativ dazu können die Führungsbahnen aber auch kreisförmig gekrümmt sein, ohne dass ihre Krümmungsmittelpunkte zusammenfallen. Dann hängt die Lage des Schwenkpols von der Verschiebestellung des Betätigungselements ab, d.h. der Schwenkpol "wandert" beim Verschieben des Betätigungselements.

Bei einer weiteren Alternative sind die Führungsbahnen gerade und parallel. In diesem Fall liegen die Krümmungsmittelpunkte und der Schwenkpol des Betätigungselements im Unendlichen.

Nach einer Weiterbildung der Erfindung können die Führungsbahnen durch mehrere einzelne gekrümmte Kurvenabschnitte gebildet sein, die in sich "glatt" sind. In den Übergangsbereichen der Kurvenabschnitte sind dann "Knicke" vorhanden. Selbstverständlich können die Übergangsbereiche auch gerundet sein.

Im folgenden wird die Erfindung anhand von Ausführungsbeispielen im Zusammenhang mit der Zeichnung näher erläutert. Es zeigen:
- Figur 11: ein Betätigungselement gemäß der Erfindung;
- Figur 12: das Betätigungselement der Figur 11 in zwei verschiedenen Schaltstellungen;
- Figur 13: eine Führungsbahn, die aus mehreren einzelnen Bahnabschnitten zusammengesetzt ist; und
- Figur 14: eine weiteres Ausführungsbeispiel gemäß der Erfindung in drei verschiedenen Schaltstellung.

Figur 11 zeigt ein Betätigungselement 16 zum axialen Verschieben einer Schaltmuffe (nicht dargestellt) eines Getriebes. Das Betätigungselement 16 weist hier drei "Flügel" 17 - 19 auf. Am Flügel 17 ist ein Mitnehmer 14 vorgesehen, in den ein Schaltfinger 20 eingreift, der fest mit einer Schaltwelle 21 verbunden ist.

Etwa in der Mitte des Betätigungselementes 16 ist ein "Übertragungselement" 22 vorgesehen, welches die über die Schaltwelle 21 in das Betätigungselement 16 eingeleitete Schaltkraft auf eine hier nicht dargestellte Schaltmuffe überträgt und diese axial verschiebt.

In den beiden Flügeln 18, 19 des Betätigungselements 16 sind "Führungsbahnen" vorgesehen, die hier geschlossene Kulissenführungen 22, 23 sind. Die Kulissenführungen 22, 23 sind durch Ausnehmungen im Betätigungselement 16 gebildet. In die Kulissenführungen 22, 23 greifen getriebefeste Lagerzapfen 24, 25 ein. Das Betätigungselement 16 ist somit "auf" den Lagerzapfen 24, 25 verschieblich, d.h. die Kulissenführungen 22, 23 und die zugeordneten Lagerzapfen 24, 25 bilden "Gleitlager".

Alternativ dazu kann auch vorgesehen sein, dass zwischen den Lagerzapfen 24, 25 und den Kulissenführungen 22, 23 Wälzlager angeordnet sind, was Schaltkräfte verringert und den Schaltkomfort weiter verbessert.

Die Kulissenführungen 22, 23 sind kreisförmig gekrümmt, wobei der mittlere Krümmungsradius der Kulissenführungen 22, 23 r₃ beträgt. Wie aus Fig. 11 ersichtlich ist, fallen hier die Krümmungsmittelpunkte der Kulissenführungen 22, 23 im Punkt P zusammen, was einen Sonderfall darstellt. Der Punkt P entspricht somit gleichzeitig dem momentanen Schwenkpol (Momentanpol) des Betätigungselements 16. Da die Krümmungsmittelpunkte der beiden Kulissenführungen zusammenfallen ergibt sich eine weitere Besonderheit, nämlich, dass der Schwenkpol P unabhängig von der Stellung des Betätigungselements 16 orts- bzw. getriebefest ist.

Die Gleitschwinge, bzw. das Betätigungselement 16 führt bei seiner Verschiebung eine Schwenkbewegung um den virtuellen Schwenkpol P durch, der einen Abstand r₃ von den Lagerzapfen 24, 25 hat. Am Punkt P', der einen Abstand r₂ vom Schwenkpol P hat, erfolgt die Weiterleitung der Schaltkraft an die hier nicht dargestellte Schaltmuffe.

Alternativ zu dem hier gezeigten Ausführungsbeispiel können die Führungsbahnen auch nicht kreisförmig gekrümmt sein. Bei einer anderen Variante können sie gerade ausgebildet sein. Wenn sie gerade sind, aber schräg zueinander angeordnet sind, d.h. wenn sich ihre "Verlängerungen" schneiden, dann verschiebt sich der virtuelle Schwenkpol P bei einer Verschiebung bzw. bei einem Verschwenken des Betätigungselements 16.

Wenn die Führungsbahnen hingegen gerade sind und parallel zueinander verlaufen, dann führt das Betätigungselement 16 eine rein translatorische Bewegung aus. Die Radien r₁ und r₂ sind dann unendlich, das heißt der virtuelle Schwenkpol P und die Krümmungsmittelpunkte der Führungsbahnen liegen im Unendlichen.

**Figur 12** zeigt das Betätigungselement der Figur 11 in zwei unterschiedlichen Schwenkstellungen. Es ist ersichtlich, dass zwischen dem Mitnehmer 14 und dem Schaltfinger 20 ein gewisses Spiel vorhanden sein muss, so dass die unterschiedlichen hier gezeigten Schrägstellungen eingenommen werden können.

Die unterschiedlichen Phasen eines Schaltvorganges zwischen der Neutralposition und dem vollständig eingelegten Gang können zur Optimierung des Schaltkomforts unterschiedliche, das heißt variable Radienverhältnisse r₂/r₁ bzw. r₁/r₂ erforderlich machen. Es ist also wünschenswert, wenn sich die Schaltkraftübersetzung in Abhängigkeit von der Schaltstellung des Betätigungselementes 16 ändert.

Ein derartiger "Servo-Effekt" mit variabler Schaltkraftübersetzung ist durch eine entsprechende Gestaltung der Führungsbahnen 22, 23 möglich, was im Ausführungsbeispiel der **Figur 13** dargestellt ist. Die Kulissenführung 22 besteht hier aus fünf Führungsbahnabschnitten 26 - 30. Die Führungsbahnabschnitte 26 - 30 haben jeweils einen kreisförmigen Verlauf, wobei den Führungsbahnabschnitten 26, 28 und 30 jeweils ein gemeinsamer Krümmungsmittelpunkt P₁ und dem Führungsbahnabschnitten 27, 29 ein Krümmungsmittelpunkt P₂ zugeordnet ist. Im Unterschied zum Ausführungsbeispiel der Figur 11 "springen" also bei einem Schaltvorgang die Krümmungsmittelpunkte Pᵢ. Jeder Führungsbahnabschnitt weist hier einen eigenen Krümmungsradius auf.

Die getriebegehäuse- bzw. gleitschwingenbezogenen Führungsbahnen werden in ihrer Form von der Lage des momentanen virtuellen Schwenkpols und der Geometrie der Lagerpunkte bestimmt. Bei einer Getriebeschaltvorrichtung mit einem Betätigungselement, das Führungsbahnen aufweist, wie sie in **Figur 13 sind**, können zwei Gänge geschaltet werden. Der Schaltvorgang ist exemplarisch in drei Phasen I-III aufgeteilt. Während der Phasen I und III führt der zugeordnete Lagerzapfen des Betätigungselements eine rotatorische Bewegung um den Schwenkpol P₁ aus. Während der Phase II hingegen führt er eine rotatorische Bewegung um den Schwenkpol P₂ aus.

Die geometrischen Gegebenheiten innerhalb eines Getriebes können ein Betätigungselement erforderlich machen, bei dem sich ein Teil der getriebegehäuse- bzw. "gleitschwingenbezogenen" Lagerbahnen zu jedem Zeitpunkt des Schaltvorganges auf die Lage eines ersten virtuellen Drehpunktes Q beziehen, während sich ein anderer Teil der getriebegehäuse- bzw. gleitschwingenbezogenen Lagerbahnen sich zu jedem Zeitpunkt der Schaltung auf die Lage eines zweiten virtuellen Drehpunktes Q' beziehen.

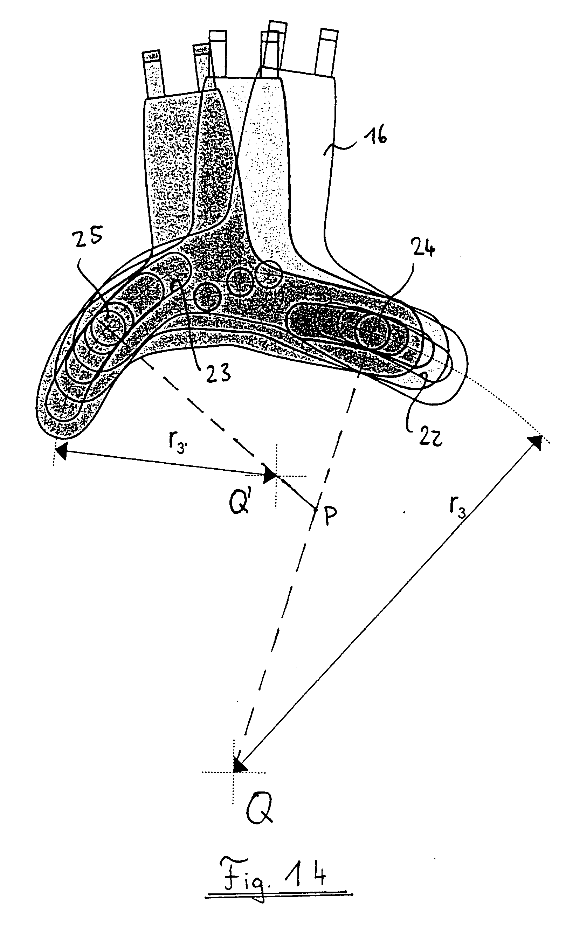

Ein derartiges Betätigungselement ist in **Figur 14** gezeigt. Die Kulissenführungen 22, 23 sind hier ähnlich wie bei Figur 11 kreisförmig. Im Unterschied zu **Figur 11** haben die Kulissenführungen 22, 23 jedoch unterschiedliche, das heißt nicht zusammenfallende Krümmungsmittelpunkte Q bzw. Q', denen die Krümmungsradien r₃ bzw. r₃' zugeordnet sind. Der momentane Schwenkpol P des Betätigungselements 16 bzw. der Gleitschwinge ergibt sich als Schnittpunkt der verlängerten Krümmungsradien der beiden Kulissenführungen 22, 23.

Auch bei einer Kulissenführungsform gemäß **Figur 13** kann - wie bei **Figur 14** - vorgesehen sein, dass die Krümmungsmittelpunkte der einander zugeordneten Führungsbahnabschnitte der beiden Kulissenführungen nicht zusammenfallen. Das heißt, auch bei Kulissenführungen, die aus mehreren Führungsbahnabschnitten zusammengesetzt sind, kann in jeder Schaltstellung ein Teil der getriebegehäuse- bzw. gleitschwingenbezogenen Führungsbahnabschnitte auf die Lage eines virtuellen Krümmungsmittelpunktes Q bezogen sein und ein anderer Teil der getriebegehäuse- bzw. gleitschwingenbezogenen Führungsbahnabschnitte kann auf einen virtuellen Krümmungsmittelpunkt Q' bezogen sein, wobei sich der Schwenkpol des Betätigungselements in jeder Schaltstellung als Schnittpunkt der momentanen Krümmungsradien ergibt.

## Patentansprüche

1. Getriebeschalteinrichtung mit
einem Betätigungselement zum axialen Verschieben einer Getriebeschaltmuffe (3), wobei das Betätigungselement (17) um einen Schwenkpol (P) schwenkbar ist und durch eine Lagereinrichtung (22-25) im Getriebe gelagert ist, **dadurch gekennzeichnet, dass** die Lagereinrichtung eine Schiebelagereinrichtung (22 - 25) ist und dass der Schwenkpol (P) ein virtueller Schwenkpol ist.

2. Getriebeschalteinrichtung nach Anspruch 1, **dadurch gekennzeichnet, dass** der Schwenkpol (P) außerhalb des Betätigungselements (16) liegt.

3. Getriebeschalteinrichtung nach Anspruch 1 oder 2, **dadurch gekennzeichnet, dass** die Schiebelagereinrichtung zwei voneinander beabstandete Lagerpunkte (24, 25) aufweist.

4. Getriebeschalteinrichtung nach Anspruch 3, **dadurch gekennzeichnet, dass** jeder Lagerpunkt (24, 25) der Schiebelagereinrichtung durch eine Führungsbahn (22, 23) und einen relativ dazu verschieblichen Lagerzapfen (24, 25) gebildet ist.

5. Getriebeschalteinrichtung nach Anspruch 4, **dadurch gekennzeichnet, dass** die Führungsbahnen (22, 23) durch mindestens eine im Betätigungselement (16) vorgesehene Ausnehmung gebildet sind dass und die Lagerzapfen (24, 25) getriebefest angeordnet sind.

6. Getriebeschalteinrichtung nach Anspruch 4, **dadurch gekennzeichnet, dass** die Führungsbahnen (22, 23) getriebefest angeordnet sind und dass die Lagerzapfen (24, 25) fest mit dem Betätigungselement (16) verbunden sind.

7. Getriebeschalteinrichtung nach einem der Ansprüche 4 bis 6, **dadurch gekennzeichnet, dass** die Führungsbahnen (22, 23) und der zugeordnete Lagerzapfen (24, 25) Gleitlager bilden.

8. Getriebeschalteinrichtung nach einem der Ansprüche 4 bis 6, **dadurch gekennzeichnet, dass** zwischen den Lagerzapfen (24, 25) und den Führungsbahnen (22, 23) jeweils ein Wälzlager angeordnet ist.

9. Getriebeschalteinrichtung nach einem der Ansprüche 1 bis 8, **dadurch gekennzeichnet, dass** die Führungsbahnen (22, 23) durch mindestens eine geschlossene Kulissenführung gebildet sind.

10. Getriebeschalteinrichtung nach einem der Ansprüche 1 bis 9, **dadurch gekennzeichnet, dass** die Führungsbahnen durch zwei separate geschlossene Kulissenführungen (22, 23) gebildet sind.

11. Getriebeschalteinrichtung nach einem der Ansprüche 4 bis 10, **dadurch gekennzeichnet, dass** die Führungsbahnen (22, 23) in einer gemeinsamen Ebene liegen.

12. Getriebeschalteinrichtung nach einem der Ansprüche 4 bis 11, **dadurch gekennzeichnet, dass** die Führungsbahnen (22, 23) gekrümmte glatte Kurven sind.

13. Getriebeschalteinrichtung nach einem der Ansprüche 4 bis 12, **dadurch gekennzeichnet, dass** die Führungsbahnen (22, 23) kreisförmig gekrümmt sind und einen gemeinsamen Krümmungsmittelpunkt (P) aufweisen.

14. Getriebeschalteinrichtung nach einem der Ansprüche 4 bis 12, **dadurch gekennzeichnet, dass** die Führungsbahnen (22, 23) kreisförmig gekrümmt sind und jeweils einen separaten Krümmungsmittelpunkt (Q, Q') haben, die nicht zusammenfallen.

15. Getriebeschalteinrichtung nach einem der Ansprüche 4 bis 11, **dadurch gekennzeichnet, dass** die Führungsbahnen (22, 23) gerade und parallel sind, wobei ihre Krümmungsmittelpunkte und der Schwenkpol des Betätigungselements (16) im Unendlichen liegen.

16. Getriebeschalteinrichtung nach einem der Ansprüche 4 bis 14, **dadurch gekennzeichnet, dass** die Führungsbahnen (22, 23) jeweils gekrümmte glatte Kurvenabschnitte (26 - 30) aufweisen, wobei in den Übergangsbereichen der Kurvenabschnitte (26 - 30) gerundete Übergangsbereiche vorgesehen sind.

17. Getriebeschalteinrichtung nach Anspruch 16, **dadurch gekennzeichnet, dass** mehreren Kurvenabschnitten (26 - 30) ein gemeinsamer Schwenkpol zugeordnet ist.

## Claims

1. A gear-shifting arrangement comprising an actuating element for axially moving a clutch sleeve (3), wherein the actuating element (17) is pivotable around a centre of rotation (P) and is mounted in the gear unit via a bearing arrangement (22 - 25), **characterised in that** the bearing arrangement is a sliding bearing arrangement (22 - 25) and the centre of rotation (P) is a virtual centre of rotation.

2. A gear-shifting arrangement according to claim 1, **characterised in that** the centre of rotation (P) lies outside the actuating element (16).

3. A gear-shifting arrangement according to claim 1 or 2, **characterised in that** the sliding-bearing arrangement has two spaced-apart bearing points (24, 25).

4. A gear-shifting arrangement according to claim 3, **characterised in that** each bearing point (24, 25) of the sliding-bearing arrangement is in the form of a guide track (22, 23) and a journal (24, 25) movable relative thereto.

5. A gear-shifting arrangement according to claim 4, **characterised in that** the guide tracks (22, 23) are formed by at least one recess in the actuating element (16) and the journals (24, 25) are fixed to the gear system.

6. A gear-shifting arrangement according to claim 4, **characterised in that** the guide tracks (22, 23) are fixed to the gear system and the journals (24, 25) are fixed to the actuating element (16).

7. A gear-shifting arrangement according any of claims 4 to 6, **characterised in that** the guide tracks (22, 23) and the associated journals (24, 25) are in the form of sliding bearings.

8. A gear-shifting arrangement according to any of claims 4 to 6, **characterised in that** a rolling bearing is disposed between the respective journals (24, 25) and the guide tracks (22, 23).

9. A gear-shifting arrangement according to any of claims 1 to 8, **characterised in that** the guide tracks (22, 23) are in the form of at least one closed slotted guide.

10. A gear-shifting arrangement according to any of claims 1 to 9, **characterised in that** the guide tracks are formed by two separate closed slotted guides (22, 23).

11. A gear-shifting arrangement according to any of claims 4 to 10, **characterised in that** the guide tracks (22, 23) lie in a common plane.

12. A gear-shifting arrangement according to any of claims 4 to 11, **characterised in that** the guide tracks (22, 23) are bent flat curves.

13. A gear-shifting arrangement according to any of claims 4 to 12, **characterised in that** the guide tracks (22, 23) are circular and have a common centre of curvature (P).

14. A gear-shifting arrangement according to any of claims 4 to 12, **characterised in that** the guide tracks (22, 23) are circular and have separate centres of curvature (Q, Q') which do not coincide.

15. A gear-shifting arrangement according to any of claims 4 to 11, **characterised in that** the guide tracks (22, 23) are straight and parallel, with their centres of curvature and the centre of rotation of the actuating element (16) lying at infinity.

16. A gear-shifting arrangement according to any of claims 4 to 14, **characterised in that** the guide tracks (22, 23) each have curved flat portions (26 - 30), with rounded regions at the transitions between the curve portions (26 - 30).

17. A gear-shifting arrangement according to claim 16, **characterised in that** a number of curve portions (26 - 30) have a common centre of rotation.

## Revendications

1. Dispositif de changement de vitesses pour transmission comportant un élément d'actionnement pour faire coulisser dans le sens axial un manchon de commutation de boîte de vitesses (3), l'élément d'actionnement (17) pouvant pivoter autour d'un centre de rotation (P) en étant logé dans la boîte de vitesses par un dispositif de paliers (22 à 25),
**caractérisé en ce que**
le dispositif de paliers est un dispositif de paliers coulissants (22 à 25) et le centre de rotation (P) est un centre de rotation virtuel.

2. Dispositif de changement de vitesses pour transmission selon la revendication 1,
**caractérisé en ce que**
le centre de rotation (P) figure à l'extérieur de l'organe d'actionnement (16).

3. Dispositif de changement de vitesses pour transmission selon la revendication 1 ou 2,
**caractérisé en ce que**
le dispositif de paliers coulissants présente deux points de palier (24, 25) écartés l'un de l'autre.

4. Dispositif de changement de vitesses pour transmission selon la revendication 3,
**caractérisé en ce que**
chaque point de palier (24, 25) du dispositif de paliers coulissants est formé par une trajectoire de guidage (22, 23) et un tourillon de palier (24, 25) pouvant coulisser par rapport à elles.

5. Dispositif de changement de vitesses pour transmission selon la revendication 4,
**caractérisé en ce que**
les trajectoires de guidage (22, 23) sont formées d'au moins un creux prévu dans l'organe d'actionnement (16) et les tourillons de palier (24, 25) sont disposés de manière fixe par rapport à la boîte de vitesses.

6. Dispositif de changement de vitesses pour transmission selon la revendication 4,
**caractérisé en ce que**
les trajectoires de guidage (22, 23) sont disposées de manière fixe par rapport à la boîte de vitesses et les tourillons de palier (24, 25) sont reliés de manière fixe avec l'organe d'actionnement (16).

7. Dispositif de changement de vitesses pour transmission selon l'une quelconque des revendications 4 à 6,
**caractérisé en ce que**
les trajectoires de guidage (22, 23) et les tourillons de palier (24, 25) affectés forment des paliers lisses.

8. Dispositif de changement de vitesses pour transmission selon l'une quelconque des revendications 4 à 6,
**caractérisé en ce qu'**
un roulement à rouleaux est à chaque fois disposé entre les tourillons de palier (24, 25) et les trajectoires de guidage (22, 23).

9. Dispositif de changement de vitesses pour transmission selon l'une quelconque des revendications 1 à 8,
**caractérisé en ce que**
les trajectoires de guidage (22, 23) sont formées par au moins un guide de coulisse fermé.

10. Dispositif de changement de vitesses pour transmission selon l'une quelconque des revendications 1 à 9,
**caractérisé en ce que**
les trajectoires de guidage sont formées par deux guidages de coulisse (22, 23) fermés, séparés.

11. Dispositif de changement de vitesses pour transmission selon l'une quelconque des revendications 4 à 10,
**caractérisé en ce que**
les trajectoires de guidage (22, 23) reposent dans un plan commun.

12. Dispositif de changement de vitesses pour transmission selon l'une quelconque des revendications 4 à 11,
**caractérisé en ce que**
les trajectoires de guidage (22, 23) sont des courbes lisses incurvées.

13. Dispositif de changement de vitesses pour transmission selon l'une quelconque des revendications 4 à 12,
**caractérisé en ce que**
les trajectoires de guidage (22, 23) sont courbées en forme de cercle et présentent un centre de courbure (P) commun.

14. Dispositif de changement de vitesses pour transmission selon l'une quelconque des revendications 4 à 12,
**caractérisé en ce que**
les trajectoires de guidage (22, 23) sont courbées en forme de cercle et présentent chaque fois un centre de courbure (Q, Q') séparé qui ne coïncide pas.

15. Dispositif de changement de vitesses pour transmission selon l'une quelconque des revendications 4 à 11,
**caractérisé en ce que**
les trajectoires de guidage (22, 23) sont droites et parallèles, leur centre de courbure et l'axe de rotation de l'organe d'actionnement (16) figurant à l'infini.

16. Dispositif de changement de vitesses pour transmission selon l'une quelconque des revendications 4 à 14,
**caractérisé en ce que**
les trajectoires de guidage (22, 23) présentent chaque fois des sections de courbe (26 à 30) lisses, incurvées, des zones de transmission arrondies étant prévues dans les zones de transmission des sections de courbe (26 à 30).

17. Dispositif de changement de vitesses pour transmission selon la revendication 16,
**caractérisé en ce qu'**
un centre de rotation commun est affecté à plusieurs sections de courbes (26 à 30).
